# EUROPÄISCHE PATENTSCHRIFT

(11) **EP 1 288 271 B1**
(45) Veröffentlichungstag und Bekanntmachung des Hinweises auf die Patenterteilung: **25.07.2007**
(21) Anmeldenummer: 02017355.5
(22) Anmeldetag: 02.08.2002
(51) Int. Cl.: C09J 7/02, B65B 51/06

(54) **Klebeband, insbesondere Verpackungsklebeband, mit einem Träger auf Basis einer gereckten Thermoplastfolie, der einseitig mit einer Klebemasse beschichtet ist**
Adhesive tape, especially for packaging, having a carrier of oriented thermoplast film unilaterally coated with adhesive
Ruban adhésif, notamment pour des emballages, ayant un porteur à base d'une feuille de thermoplaste étiré, unilatéralement recouvert d'une matière adhésive

(30) Priorität: 24.08.2001 DE 10141502
(43) Veröffentlichungstag der Anmeldung: 05.03.2003
(73) Patentinhaber: tesa AG, 20253 Hamburg (DE)
(72) Erfinder: Wenninger, Dieter, Dr., 258371 Singapore (SG); David, Wolfgang, 21149 Hamburg (DE)
(74) Vertreter: Stubbe, Andreas

(56) Entgegenhaltungen:
- EP-A- 0 776 954
- EP-A- 1 050 566
- EP-A- 1 078 966

## Beschreibung

Die Erfindung betrifft ein Klebeband, insbesondere ein Verpackungsklebeband, mit einem Träger auf Basis einer gereckten Thermoplastfolie, der einseitig mit einer Klebemasse beschichtet ist, wobei auf der beschichteten Seite des Trägers zumindest ein im Vergleich zur Breite des Klebebands schmaler und in Längsrichtung des Klebebands verlaufender Streifen vorhanden ist

Vollflächig beschichtete Klebebänder beziehungsweise speziell Verpackungsklebebänder sind Stand der Technik. Ein Überblick befindet sich beispielsweise im Handbook of pressure sensitive adhesive technologie", second edition, herausgegeben durch Donatas Satas, Van Nostrand Reinhold, New York, 1989, Seiten 661 bis 674.

Bei diesen Standardverpackungsklebebändem besteht das Problem, daß das Öffnen von verschlossenen Kartons mit Hilfe von Cuttern, Messern, Scheren, Fingernägeln oder anderen spitzen Werkzeugen erfolgen muß, weii ein schnelles Öffnen der mit Verpackungsklebebändern verschlossenen Kartons durch einfaches Aufreißen mit den Fingern, indem das Klebeband vollständig entfernt wird, nicht gegeben ist. Diese Hilfsmittel bedingen eine Verletzungsgefahr beziehungsweise eine Gefahr der Beschädigung des Inhalts der Verpackung.

Zur Vereinfachung des Öffnens von Kartons, welche ein Verpackungsklebeband tragen, sind zahlreiche Lösungen vorgeschlagen und zum Teil umgesetzt worden.

DE 198 36 221 A1 hat ein leichtes Öffnen von verschlossenen Kartons so gelöst, daß extra spezielle Kartons mit Sollbruchprägungen bei der Kartonfabrikation hergestellt werden müssen. Werden beim Kartonverschließen diese Sollbruchkartonstellen mit Klebeband überklebt, so lassen sich diese später als Anfasser leicht herauslösen und demgemäß problemlos mit dem Klebeband abziehen.

Die Erfindung umfaßt einen Zuschnitt für eine wenigstens eine Öffnung aufweisende Verpackung, vorzugsweise aus Wellpappe, wobei in dem Zuschnitt wenigstens ein Soll-Trennstück derart ausgebildet ist, daß es bei geschlossener Öffnung seitlich der Öffnung angeordnet ist. Des weiteren wird eine mit einem Klebestreifen verschlossene beziehungsweise verschließbare Verpackung, vorzugsweise aus Wellpappe, beschrieben, bei welcher wenigstens ein Ende des Klebestreifens auf einem Soll-Trennstück der Verpackung festgeklebt beziehungsweise festklebbar ist.

Zum Öffnen der Verpackung, wenn diese mit dem Klebestreifen verschlossen ist, braucht somit lediglich das Soll-Trennstück aus der Verpackung gelöst werden. Da an diesem Soll-Trennstück der Klebestreifen festgeklebt ist, kann auf diese Weise ohne Weiteres genügend Angriffsfläche an dem Klebestreifen beziehungsweise dem Soll-Trennstück bereitgestellt werden, so daß der Klebestreifen ohne weitere Schwierigkeit abgezogen beziehungsweise entfernt werden kann.

US 6,089,447 A1 schlägt vor, bei der Kartonzuschnittherstellung auf den Karton spezielle Pappanfasser aufzukleben, die, nachdem der Karton mit Verpackungsband verschlossen worden ist, als Anfasser dienen.

JP 11 321 817 A1 schlägt vor, eine automatische Verpackungsmaschine entsprechend zu konstruieren, so daß beim Auflegen des Endes des Verschlußklebebandes eine Klebebandlasche mit einer speziellen Saugvorrichtung gebildet wird, die beim Öffnen des Kartons als Anfasser dienen soll.

Eine weitere Lösung bietet die Fa. Soco Systems A/S in Dänemark an. Hier muß extra an eine automatische Kartonverschließmaschine ein spezielles Kit angebaut werden, welches Papieranfasser beim Verpackungsvorgang auf das Klebebandende aufklebt, so daß später ein leichteres Öffnen gewährleistet werden kann.

US 5,672,402 A1 setzt für Standardkartons strippbare Klebestreifen ein, die beim Kartonverschließen überstehen. Durch starkes Ziehen am überstehenden Ende lassen sich diese stark verdehnen und so durch die nachlassende Klebkraft leicht entfernen. Für den automatischen Kartonverschluß sind diese Strips ungeeignet, da die Kartonverschlußanlagen nur Klebebänder von der Rolle verarbeiten können.

Verpackungsklebebänder, die aus Verpackungsklebeband und Aufreißsteifen bestehen, haben zwar den Vorteil, daß der Aufreißstreifen das Verpackungsklebeband auf dem Karton leicht aufreißen läßt, die Restlaschen auf den Kartonseiten müssen dann aber noch mühsam entfernt werden.

US 6,159,328 A1 beschreibt zum Beispiel einen speziellen Abroller, der Verpackungsklebeband und Aufreißstreifen auf den Karton aufbringen kann.

Gemeinsam all dieser Varianten ist der Nachteil, daß entweder keine Standardkartonagen oder Geräte verwendet werden können und somit der Einsatz limitiert ist oder eine deutliche Schwächung der Verpackung durch Schwächung der Kartonage vorliegt, wodurch die Verpackungssicherheit herabgesetzt wird.

Aufgabe der vorliegenden Erfindung ist somit ein Verpackungsklebeband auf Basis einer gereckten Thermoplastfolien zu schaffen, das sich nach dem Verschließen von Kartons ohne Hilfe von Cuttern, Messern, Scheren oder Fingernägeln oder anderen spitzen Werkzeugen leicht und schnell vom Karton entfernen läßt, und dies bei Verwendung von Standardkartonagen und Standardapplikationsmaschinen, sowie das die bekannten Nachteile des Standes der Technik nur in reduziertem Maße aufweist.

Gelöst wird diese Aufgabe durch ein Klebeband, wie es in den Ansprüchen dargelegt ist. Weiterbildungen des erfindungsgemäßen Klebebands sind dabei Gegenstand der Unteransprüche. Des weiteren umfaßt die Erfindung Verwendungsmöglichkeiten des Klebebands in vorteilhafter Weise.

Demgemäß beschreibt die Erfindung ein Klebeband mit einem Träger auf Basis einer gereckten Thermoplastfolie, der einseitig mit einer Klebemasse beschichtet ist, wobei auf der beschichteten Seite des Trägers zumindest ein im Vergleich zur Breite des Klebebands schmaler und in Längsrichtung des Klebebands verlaufender Streifen vorhanden ist, dessen Klebkraft zumindest abschnittsweise verringert oder vollständig reduziert ist.

Die Verringerung oder vollständige Reduzierung der Klebkraft des Streifens erfolgt vorzugsweise durch eine Bedruckung der Klebemasse.

Die vollständige Inertisierung der Klebmasseoberfläche - insbesondere zur Bildung eines Anfassers - kann durch Abdeckung durch zum Beispiel dünne Folien aus zum Beispiel Kunststoff oder Metall oder durch Abdeckung mit dünnen Papieren vorgenommen werden. Bevorzugterweise wird die Inertisierung entsprechend DE 44 31 914 A1 realisiert, auf die hiermit ausdrücklich bezug genommen wird und die Teil der Offenbarung dieser Erfindung wird.

Alternativ kann eine Beschichtung oder Bedruckung der zu inertisierenden Haftklebmassebereiche mittels eines nichtklebrigen Lacks oder eines nichtklebrigen pulverförmigen Materials durchgeführt werden.

Die Inertisierung kann dabei so durchgeführt werden, daß das Klebeband im Bereich des oder der Streifen im Vergleich zur Klebkraft des Klebebands nur eine geringe Klebkraft aufweist. Dies ist möglich durch eine gezielt partielle Bedruckung oder Beschichtung.

In diesem Fall werden die Anfasserbereiche durch den genutzten Träger gestellt, welcher derart partiell mit Klebmasse beschichtet oder bedruckt wird, daß die Anfasserbereiche nicht so stark auf der Kartonoberfläche oder überhaupt nicht auf dieser verkleben.

Weiterhin können die Klebemassen rasterpunktförmig mittels Siebdruck (DE 42 37 252 C2), wobei die Klebstoffpünktchen auch unterschiedlich groß und/oder unterschiedlich verteilt sein können (EP 0 353 972 B1), durch Tiefdruck (DE 43 08 649 C2) in Längs- und Querrichtung zusammenhängenden Stegen, durch Rasterdruck oder durch Flexodruck aufgebracht werden.

Die Klebemasse kann auf dem Streifen vorzugsweise in Kalottenform durch Siebdruck vorliegen oder auch in einem anderen Muster wie Gitter, Streifen, Zickzacklinien und beispielsweise auch durch Tiefdruck aufgebracht sein. Ferner kann sie beispielsweise auch aufgesprüht sein, was ein mehr oder weniger unregelmäßiges Auftragsbild ergibt.

In einer bevorzugten Ausführungsform ist die Klebemasse in Form von polygeometrischen Kalotten auf den Träger aufgebracht.

Die Kalotten können unterschiedliche Formen aufweisen. Bevorzugt sind abgeflachte Halbkugeln. Weiterhin ist auch der Aufdruck anderer Formen und Muster auf dem Trägermaterial möglich, so beispielsweise ein Druckbild in Form alphanumerischer Zeichenkombinationen oder Muster wie Gitter, Streifen, des weiteren Kumulate der Kalotten und Zickzacklinien.

Beispielsweise kann die Klebemasse auf dem Streifen eine vollflächige Lackierung tragen, zum Beispiel eine Trennlackierung.

Weiterhin ist vom Erfindungsgedanken ein Klebeband mit einem Träger auf Basis einer gereckten Thermoplastfolie umfaßt, der einseitig mit einer Klebemasse beschichtet ist, wobei auf der beschichteten Seite des Trägers zumindest ein im Vergleich zur Breite des Kiebebands schmaler und in Längsrichtung des Klebebands verlaufender Streifen vorhanden ist, der zumindest abschnittsweise nicht mit Kleber beschichtet ist.

Bei der Klebmassebeschichtung kann zum Beispiel direkt hinter dem verwendeten Drahtrakel mit einer Kunststoffschablone Klebmasse so abgerakelt, daß ein Klebmasseballen entsteht, der in Längsrichtung zum Ballen klebmassefreie Zonen und klebmassehaltige Zonen aufweist.

In einer vorteilhaften Ausführungsform der Erfindung liegt ein Streifen am Rand des Klebbands, so daß sich ein deutlich hervorstehender Anfasser ergibt, der von demjenigen, der einen mit dem erfindungsgemäßen Klebeband verschlossenen Karton öffnen möchte, leicht erkannt und benutzt werden kann.

Die in ihrer Klebkraft reduzierten beziehungsweise Klebemasse freien Streifen können auf ihrer gesamten Länge entsprechend verändert sein, erfindungsgemäß ist aber auch, wenn dies nur abschnittsweise geschieht, vergleichbar einer Strichlinie, wobei die Abstände zwischen den einzelnen Strichen beliebig gewählt werden können.

Erfindungsgemäß als Folien einsetzen lassen sich monoaxial und biaxial gereckte Folien auf Basis von Polyolefinen, dann Folien auf Basis von gerecktem Polyethylen oder gereckten Copolymeren, enthaltend Ethylen- und/oder Polypropyleneinheiten, gegebenenfalls auch PVC-Folien, PET-Folien, Folien auf Basis von Vinylpolymeren, Polyamiden, Polyester, Polyacetalen, Polycarbonaten

Folien auf Basis von gereckten Polyolefinen, zum Beispiel monoaxial und biaxial gereckte Folien, werden in großen Mengen für Verpackungsklebebänder, Strapping Tapes und andere Klebebänder eingesetzt. Auch Folien auf Basis von gerecktem Polyethylen oder gereckten Copolymeren, enthaltend Ethylen- und/oder Polypropyleneinheiten lassen sich als Trägerfolie erfindungsgemäß einsetzen.

Monoaxial gerecktes Polypropylen zeichnet sich durch seine sehr hohe Reißfestigkeit und geringe Dehnung in Längsrichtung aus und wird beispielsweise zur Herstellung von Strapping Tapes verwendet. Bevorzugt zur Herstellung der erfindungsgemäßen Klebebänder zum Bündeln und Palettieren von Kartonagen und anderen Gütern sind monoaxial gereckte Folien auf Basis von Polypropylen. Die Dicken der monoaxial gereckten Folien auf Basis von Polypropylen liegen bevorzugt zwischen 25 und 200 µm, insbesondere zwischen 40 und 130 µm.

Folien aus monoaxial gerecktem Polypropylen sind zur Herstellung der erfindungsgemäßen Klebebänder besonders geeignet. Monoaxial gereckte Folien sind überwiegend einschichtig, grundsätzlich können aber auch mehrschichtige monoaxial gereckte Folien hergestellt werden. Bekannt sind überwiegend ein-, zwei- und dreischichtige Folien, wobei die Anzahl der Schichten auch größer gewählt werden kann.

Bevorzugt zur Herstellung der erfindungsgemäßen Klebebänder zum sicheren Kartonverschluß sind biaxial gereckte Folien auf Basis von Polypropylen mit einem Reckverhältnis in Längsrichtung zwischen 1:4 und 1:9, bevorzugt zwischen 1:4,8 und 1:6 sowie einem Reckverhältnis in Querrichtung zwischen 1:4 und 1:9, bevorzugt zwischen 1:4,8 und 1:8,5.

Die erzielten Elastizitätsmodule in Längsrichtung, gemessen bei 10 % Dehnung nach ASTM D882, liegen üblicherweise zwischen 1000 und 4000 N/mm², vorzugsweise zwischen 1500 und 3000 N/mm².

Die Dicken der biaxial gereckten Folien auf Basis von Polypropylen liegen besonders zwischen 15 und 100 µm, vorzugsweise zwischen 20 und 50 µm.

Biaxial gereckte Folien auf Basis von Polypropylen können mittels Blasfolienextrusion oder mittels üblicher Flachfolienanlagen hergestellt werden. Biaxial gereckte Folien werden sowohl ein- als auch mehrschichtig hergestellt. Im Falle der mehrschichtigen Folien können auch hier die Dicke und Zusammensetzung der verschiedenen Schichten gleich sein aber auch verschiedene Dicken und Zusammensetzungen sind bekannt.

Besonders bevorzugt für die erfindungsgemäßen Klebebänder sind einschichtige, biaxial oder monoaxial gereckte Folien und mehrschichtige, biaxiale oder monoaxiale Folien auf Basis von Polypropylen, die einen ausreichend festen Verbund zwischen den Schichten aufweisen, da ein Delaminieren der Schichten während der Anwendung nachteilig ist.

Folien auf Basis von Hart-PVC werden zur Herstellung von Verpackungsklebebändern verwendet. Weich-PVC ist aufgrund der unzureichenden Wärmebeständigkeit von max. 60 °C eher nicht zur Herstellung von Verpackungsklebebändern geeignet, kann aber gegebenenfalls ebenso Verwendung finden.

Für die erfindungsgemäßen Klebebänder, die insbesondere einen sicheren Kartonverschluß gewährleisten sollen, werden vorzugsweise Folien verwendet auf Basis von Hart-PVC. Die Dicken der Folien liegen bevorzugt zwischen 30 und 100 µm, insbesondere zwischen 35 und 50 µm.

Folien auf Polyesterbasis, zum Beispiel Polyethylenterephthalat sind ebenfalls bekannt und können ebenso zur Herstellung der erfindungsgemäßen Klebebänder eingesetzt werden. Die Dicken der Folien auf Basis von PET liegen zwischen 20 und 100 µm, insbesondere zwischen 30 und 50 µm.

Polyester sind Polymere, deren Grundbausteine durch Ester-Bindungen (-CO-O-) zusammengehalten werden. Nach ihrem chemischen Aufbau lassen sich die sogenannten Homopolyester in zwei Gruppen einteilen,
- die Hydroxycarbonsäure-Typen (AB-Polyester) und
- die Dihydroxy-Dicarbonsäure-Typen (AA-BB-Polyester).

Erstere werden aus nur einem einzigen Monomer durch zum Beispiel Polykondensation einer ω-Hydroxycarbonsäure 1 oder durch Ringöffnungspolymerisation cyclischer Ester (Lactone) 2 hergestellt, zum Beispiel

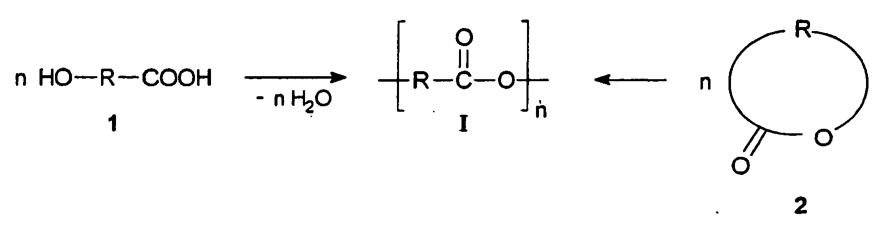

Der Aufbau letzterer erfolgt dagegen durch Polykondensation zweier komplementärer Monomerer, zum Beispiel einem Diol 3 und einer Dicarbonsäure 4:

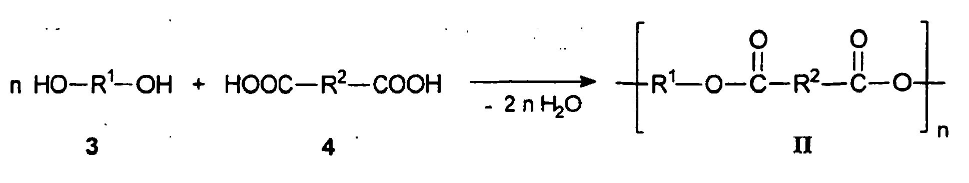

Verzweigte und vernetzte Polyester werden bei der Polykondensation von drei- oder mehrwertigen Alkoholen mit polyfunktionellen Carbonsäuren erhalten. Zu den Polyestern werden allgemein auch die Polycarbonate (Polyester der Kohlensäure) gerechnet.

AB-Typ-Polyester (I) sind u. a. Polyglykolsäuren (Polyglykolide, R = CH2), Polymilchsäuren (Polylactide, R = CH-CH3), Polyhydroxybuttersäure [Poly(3-hydroxybuttersäure), R = CH(CH3)-CH2], Poly(ε-caprolacton)e [R = (CH2)5] und Polyhydroxybenzoesäuren (R = C6H4).

Rein aliphatische AA-BB-Typ-Polyester (II) sind Polykondensate aus aliphatischen Diolen und Dicarbonsäuren, die u. a. als Produkte mit endständigen Hydroxy-Gruppen (als Polydiole) für die Herstellung von Polyesterpolyurethanen eingesetzt werden [zum Beispiel Polytetramethylenadipat; R1 = R2 = (CH2)4].

Mengenmäßig größte technische Bedeutung haben AA-BB-Typ-Polyester aus aliphatischen Diolen und aromatischen Dicarbonsäuren, insbesondere die Polyalkylenterephthalate [R2 = C6H4, mit Polyethylenterephthalat (PET) R1 = (CH2)2, Polybutylenterephthalat (PBT) R1 = (CH2)4 und Poly(1,4-cyclohexandimethylenterephthalat)e (PCDT) R1 = CH2-C6H10-CH2] als wichtigste Vertreter. Diese Typen von Polyester können durch Mitverwenden anderer aromatischer Dicarbonsäuren (zum Beispiel Isophthalsäure) beziehungsweise durch Einsatz von Diol-Gemischen bei der Polykondensation in ihren Eigenschaften breit variiert und unterschiedlichen Anwendungsgebieten angepaßt werden.

Rein aromatische Polyester sind die Polyarylate, zu denen u. a. die Poly(4-hydroxybenzoesäure) (Formel I, R = C6H4), Polykondensate aus Bisphenol A und Phthalsäuren (Formel II, R1 = C6H4-C(CH3)2-C6H4, R2 = C6H4) oder auch solche aus Bisphenolen und Phosgen gehören.

Beispielsweise ist ein metallocen-Polyethylen-Vliesstoff als Trägerschicht geeignet.

Der metallocen-Polyethylen-Vliesstoff weist vorzugsweise folgende Eigenschaften auf:
- ein Flächengewicht von 40 bis 200 g/m², insbesondere von 60 bis 120 g/m², und/oder
- eine Dicke von 0,1 bis 0,6 mm, insbesondere von 0,2 bis 0,5, und/oder
- eine Höchstzugkraft-Dehnung längs von 400 bis 700 % und/oder
- eine Höchstzugkraft-Dehnung quer von 250 bis 550 %.

Die erfindungsgemäßen Klebebänder können eine Selbstklebemasse auf Basis von Naturkautschuk, PUR, Acrylaten oder Styrol-Isopren-Styrol-Blockcolymeren enthalten.

Die Verwendung von Klebemassen auf Basis von Naturkautschuk, Acrylaten oder Styrol-Isopren-Stryrol für Verpackungsbänder ist bekannt, was auch zum Beispiel im "Handbook of pressure sensitive adhesive technologie, second edition, herausgegeben durch Donatas Satas, Van Nostrand Reinhold, New York, 1989 beschrieben wird.

Als selbstklebende Masse kommt insbesondere eine handelsübliche druckempfindliche Klebmasse auf PUR, Acrylat- oder Kautschukbasis zum Einsatz.

Besonders vorteilhaft hat sich als Klebemasse eine solche auf Acrylathotmelt-Basis erwiesen, die einen K-Wert von mindestens 20 aufweist, insbesondere größer 30, erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungsextruder bevorzugt.

Eine derartige Klebemasse ist in der DE 43 13 008 A1 dargelegt, auf deren Inhalt hiermit Bezug genommen wird und deren Inhalt Teil dieser Offenbarung und Erfindung wird. Diesen auf diesem Wege hergestellten Acrylatmassen wird in einem Zwischenschritt das Lösungsmittel vollständig entzogen.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, daß diese einen hohen K-Wert und damit ein hohes Molekulargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.
In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A1 beschrieben.

Die Klebemasse auf Acrylathotmelt-Basis kann aber auch chemisch vernetzt sein.

In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal ®, insbesondere Acronal DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Weiterhin kann eine Klebemasse verwendet werden, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol- (SIS) und Styrol-Butadien-Styrol (SBS) -Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Kohlenwasserstoffharz ist eine Sammelbezeichnung für thermoplastische, farblose bis intensiv braun gefärbte Polymere mit einer Molmasse von im allgemeinen <2000.

Sie lassen sich nach ihrer Provenienz in drei große Gruppen einteilen: In Petroleum-, Kohlenteer- und Terpenharze. Die wichtigsten Kohlenteerharze sind die Cumaron-Inden-Harze. Die Kohlenwasserstoffharze werden durch Polymerisation der aus den Rohstoffen isolierbaren ungesättigten Verbindungen gewonnen.

Zu den Kohlenwasserstoffharze werden auch durch Polymerisation von Monomeren wie Styrol beziehungsweise durch Polykondensationen (bestimmte Formaldehyd-Harze) zugängliche Polymere mit entsprechend niedriger Molmasse gerechnet. Kohlenwasserstoffharze sind Produkte mit in weiten Grenzen von <0 °C (bei 20 °C flüssige Kohlenwasserstoffharze) bis >200 °C variierendem Erweichungsbereich und einer Dichte von ca. 0,9 bis 1,2 g/cm³.

Sie sind löslich in organischen Lösungsmitteln wie Ethern, Estern, Ketonen und chlorierten Kohlenwasserstoffen, unlöslich in Alkoholen und Wasser.

Unter Kolophoniumharz wird ein natürliches Harz verstanden, das aus dem Rohharz von Koniferen gewonnen wird. Man unterscheidet drei Kolophonium-Typen: Balsamharz als Destillationsrückstand von Terpentinöl, Wurzelharz als Extrakt von Koniferen-Wurzelstöcken und Tallharz, der Destillationsrückstand von Tallöl. Die mengenmäßig größte Bedeutung hat Balsamharz.

Kolophonium ist ein sprödes, transparentes Produkt von roter bis brauner Farbe. Es ist wasserunlöslich, löslich dagegen in vielen organischen Lösungsmitteln wie (chlorierten) aliphatischen und aromatischen Kohlenwasserstoffen, Estern, Ethern und Ketonen sowie in pflanzlichen und mineralischen Ölen. Der Erweichungspunkt von Kolophonium liegt im Bereich von ca. 70 bis 80 °C.

Kolophonium ist ein Gemisch aus ca. 90 % Harzsäuren und 10 % Neutral-Stoffen (Fettsäureester, Terpenalkohole und Kohlenwasserstoffe). Die wichtigsten Kolophonium-Harzsäuren sind ungesättigte Carbonsäuren der Bruttoformel C20H30O2, Abietin-, Neoabietin-, Lävopimar-, Pimar-, isopimar-, und Paiustrinsäure, neben hydrierter und dehydrierter Abietinsäure.

Die Mengenverhältnisse dieser Säuren variieren in Abhängigkeit von der Provenienz des Kolophoniums.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 1.10 °C bis 140°C.

Die thermische Anregung der Vernetzer kann auch durch IR-Strahlen oder hochenergetische Wechselfelder erfolgen.

In einer bevorzugten Ausführungsform des Klebebands wird die Haftung der Klebmasse auf der bevorzugten Thermoplastfolie auf Basis von Polyolefinen durch Coronabehandlung oder ganz besonders durch Flammenvorbehandlung verbessert, denn gerade die Oberflächen der Folien auf Basis von gereckten Polyolefinen können durch diese allgemein bekannten Verfahren, wie die Corona- oder Flammenbehandlung, behandelt werden.

Bevorzugt sind Oberflächenbehandlungen durch Flammenvorbehandlung. Eine Übersicht über die Verfahren zur Oberflächenbehandlung enthält beispielsweise der Artikel "Surface pretreatment of plastics for adhesive bonding" /A. Kruse; G. Krüger, A. Baalmann and O. D. Hennemann; J. Adhesion Sci. Technol., Vol 9, No12, pp 1611 bis 1621 (1995).

Die Beflammungsanlage besteht im Kernstück aus einer kühlbaren Brennereinheit und einer ebenfalls kühlbaren Behandlungswalze, die zur Bahnführung dient. Während die Brennertemperatur bei der Beflammung zwischen 30 °C und 40 °C gehalten wird, sorgt die Kühlung der Behandlungswalze für Temperaturen zwischen 10 °C und 15 °C an der Walze.

Zwischen Brenner und Behandlungswalze wird die Folienbahn unter definierten Bedingungen geführt und behandelt. Die Beflammung der genannten Polyolefinfolien erfolgt über ein Brenngas-Luft-Gemisch in optimierter Zusammensetzung. Dabei besteht der Brenngasanteil aus gasförmigen Kohlenwasserstoffen wie Propan, Butan oder liegt als Gemisch von Kohlenwasserstoffen vor, zum Beispiel in Form von handelsüblichem Erdgas. Abhängig von der genauen Zusammensetzung des Brenngas-Luft-Gemisches werden Flammtemperaturen zwischen 750 °C und 900 °C erzielt. Der Abstand der Brennereinheit zur Behandlungswalze kann zwischen 2 mm und 7,5 mm reguliert werden. Bahngeschwindigkeiten sind in den Grenzen 30 m/min bis zu mehreren hundert m/min einstellbar.

Eine obere Grenze resultiert aus der Leistungsfähigkeit der zur Verfügung stehenden Anlage, das heißt der gesamten Anlage inklusive Beschichtungsteil bei inline-Trägerbehandlung oder der Beflammungsanlage bei offline-Trägervorbehandlung.

Die untere Grenze bedingt sich durch die thermische Empfindlichkeit des Folienmaterials. Der Energieeintrag ist über den Gemischvolumenstrom bei gegebenen Einstellungen für Gemischzusammensetzung, Brennerabstand und Bahngeschwindigkeit variierbar in den Grenzen von 20 m³/h bis 50 m³/h. Zusätzlich kann die effektive Beflammungsbreite über eine justierbare Brennerbegrenzung an unterschiedliche Folienbreiten angepaßt werden.

Unter optimierten Parametern beflammtes Trägermaterial wird spätestens einen Tag nach erfolgter Vorbehandlung mit Selbstklebemasse beschichtet. Mit Vergleichsmaterial, das in geeigneter Weise coronavorbehandelt wurde, wird analog verfahren.

In einer bevorzugten Ausführungsform des Klebebands wird die Haftung der Klebmasse auf der Thermoplastfolie dadurch verbessert, daß zwischen der Thermoplastfolie und der Klebeschicht eine Schicht aus einem Primer aufgetragen ist.

In einer weiteren bevorzugten Ausführungsform zur Herstellung der erfindungsgemäßen Klebebänder trägt die Thermoplastfolie eine handelsübliche Trennlackierung. Käufliche Trennlackierungen bestehen zum Beispiel aus Polyvinylstearylcarbamat als Trennkomponente.

Die erfindungsgemäßen Klebebänder sind für eine große Anzahl von Klebebandanwendungen geeignet.

Ein wichtiges Anwendungsfeld sind Verpackungsanwendungen. Die Klebebänder sind geeignet als Kartonverschlußbänder, allgemeine Verpackungsklebebänder, Strapping-Tapes, Klebebänder zum Verschließen von Kunststoffverpackungen und Kunststoffbeuteln.

Die Klebebänder sind zur Palettensicherung geeignet. Weitere Anwendungen sind das Bündeln loser Güter und Transportgüter, wie beispielsweise Rohren, Holzleisten u.a. Die erfindungsgemäßen Klebbänder können zur Transportsicherung von beispielsweise Kühlschränken und anderen elektrischen und elektronischen Geräten verwendet werden. Weitere Anwendungen sind Etikettenschutz, Oberflächenschutz, beispielsweise im Baubereich und Aufreißstreifen für Verpackungen. Ebenso sind Anwendungen im Bürobereich möglich.

Die Verpackungsklebebänder weisen insbesondere Lauflängen auf von 66, 100 und 1000 m. Als Breite der Rollen werden üblicherweise 18, 24, 36, 48, 50 und 72 mm gewählt.

Die bevorzugten Farben sind braun, weiß und transparent. Die Bedruckung erfolgt auf Rollen von 144 oder 150 mm Breite, die anschließend wieder auf die oben genannten Breiten geschnitten werden.

Im folgenden soll die Erfindung anhand von Beispielen erläutert werden, ohne die Erfindung unnötig einschränken zu wollen.

Die in den Beispielen genannten Parameter wurden mit Hilfe nachstehender Meßverfahren bestimmt.

### Wassergehalt

Die Bestimmung des Wassergehalts der Klebemasse erfolgt nach der bekannten Methode von Karl Fischer. Hierbei wird eine bekannte Menge der Klebemasse erwärmt und das hierbei ausgetriebene Wasser unter Verwendung des Karl Fischer Reagenzes mittels Titration bestimmt.

### Masseauftrag

Zur Bestimmung des Masseauftrags wird aus der beschichteten Folie ein kreisrundes Muster mit bekanntem Flächeninhalt ausgeschnitten und gewogen. Danach wird die Klebemasse durch Ablösen mit Aceton entfernt und die nun klebemassefreie Folie erneut gewogen. Aus der Differenz wird der Masseauftrag in g/m² berechnet.

### Klebkraft auf Stahl

Die Messung der Klebkraft auf Stahl erfolgt gemäß DIN EN 1939 und in Anlehnung an AFERA 4001.

### Scherfestigkeitsmessung

Die Kohäsion wird mit Hilfe der Scherfestigkeitsmessung nach PSTC 7 (Holding Power) bestimmt. Alle angegebenen Werte wurden bei Raumtemperatur und einer Belastung von 10N mit einer Verklebungsfläche von 20 x 13 mm² bestimmt. Eine gute Kohäsion ist eine Haltezeit von > 500 min mit dieser Meßmethode.

### Verschlußsicherheit

Mit dem Klebeband werden Standardkartons, wie Kraftlinerkartons Sorte 24N 515 der Fa. Nestler Wellpappe mit den Maßen Länge = 425 mm, Breite = 325 mm und einer Höhe = 165 mm und einem Füllgehalt von 20 Kg Erbsen mit jeweils einem oberen und unteren Klebestreifen in einer handelsüblichen automatischen Kartonverschließmaschine der Fa. Siat/Italien oder einem handelsüblichen Verpackungsklebebandhandabroller der Fa. tesa AG verschlossen und 30 Tage bei Raumtemperatur beziehungsweise 40 °C gelagert.

Wenn kein Klebebandverschluß sich in dieser Zeit gelöst hat, ist die Verschlußsicherheit in Ordnung.

### Anfaßvermögen zu Papier

Das zu untersuchende Klebeband wird auf die Kartonoberfläche verklebt und unter einem Winkel von 160° von Hand abgezogen. Es wird die Fläche der ausgerissenen Fasern auf dem Klebeband anschließend in % geschätzt. Ist die Fläche > 40 % wird es als ein Klebeband mit einem gutem Anfaßvermögen bezeichnet.

### Öffnungsfähigkeit

Die Öffnungsfähigkeit der unter der Rubrik Verschlußsicherheit verschlossenen Kartons wird danach beurteilt, ob sich der Karton ohne zusätzliche Öffnungshilfen wie Cutter oder anderen spitzen Gegenständen durch Anfassen an den klebfreien Stellen der Karton leicht und schnell öffnen läßt.

### Beispiele:

### 1. Beispiel

Es wird eine biaxial gereckte, transparente Folie aus Polypropylen Radil T 28 der Firma Radici/Italien verwendet:

| | |
|---|---|
| Dicke: | 28 µm |
| Flächengewicht: | 25 g/m² |
| Zugfestigkeit längs: | 167 N/mm² |
| Zugfestigkeit quer: | 277 N/mm² |
| Reißdehnung längs: | 135 % |
| Reißdehnung quer: | 57 % |

Die Oberflächenspannung der Folienoberfläche, die mit der Klebemasse beschichtet wird, beträgt 39 mN/m.

Als Klebemasse wird eine wäßrige Acrylatdispersion der Firma Rohm and Haas mit der Bezeichnung Primal PS83D (Feststoffgehalt 53 Gew.-%; Ammoniakgehalt < 0,2 Gew.-%; pH-Wert 9,1 bis 9,8) eingesetzt.

Die Beschichtung der Folie mit der Klebemasse erfolgt durch ein Drahtrakel. Das Drahtrakel und die Beschichtungsgeschwindigkeit werden so eingestellt, daß nach der Trocknung der beschichteten Folie ein Masseauftrag von ca. 24 g/m² gemessen wird. Beschichtungsgeschwindigkeit und Trocknerleistung werden so eingestellt, daß nach der Trocknung in der Klebemasse ein Wassergehalt von 0,03 bis 0,13 Gew.-% gemessen wird.

### 2. Beispiel

Um ein Verpackungsklebeband mit klebkraftfreien Zonen zu erhalten, wurden 150 mm breite Klebebandrollen gemäß Beispiel 1 hergestellt. Diese 150 mm breiten Klebebandrollen wurden so in eine Druckmaschine für Klebebandbedruckung eingelegt, daß die Druckwalze direkt auf die Klebemasse druckt. Damit kein Klebemasseumspulen auf Transport - oder Umlenkwellen auftritt, werden alle Wellen über die direkt die Klebemasseseite des Klebebandes geführt wird mit einem käuflichen antiadhäsiven Silikonklebeband tesa 4563 der Fa. tesa AG ausgerüstet.

Durch die Formung des Druckklischees der Druckwalze und anschließendem Konfektionieren in 50 mm breite Endrolien, wird die Klebemasseseite mit schwarzer Druckfarbe der Serie 15 VAA von Fa. Michael Huber GmbH / Deutschland so bedruckt, daß eine 50 mm breite Klebebandrolle auf der Klebmasseseite eine 1 cm tackfreie Zone erhält.

### 3. Beispiel

Um ein Verpackungsklebeband mit klebkraftfreien Zonen zu erhalten, wurde 50 mm breite Klebebandrollen analog dem Beispiel 1 hergestellt.

Allerdings wurde bei der Klebmassebeschichtung direkt hinter dem Drahtrakel mit einer Kunststoffschablone Klebmasse so abgerakelt, daß ein Klebmasseballen entsteht, der in Längsrichtung zum Ballen klebmassefreie Zonen und klebmassehaltige Zonen aufweist, die nach dem Konfektionieren zu Rollen führen, aus denen ein 50 mm Klebeband mit einer 10 mm klebmassefreien Zone auf einer Seite der Rolle hergestellt werden kann.

### Ergebnisse der Beispiele

| Eigenschaft | Versuch 1 nicht erfindungsgemäß | Versuch 2 erfindungsgemäß | Versuch 3 erfindungsgemäß |
|---|---|---|---|
| Wassergehalt der Klebemasse [g/m²] an nicht klebfreien Stellen | 0,08 | 0,08 | 0.08 |
| Klebemasseauftrag [g/m²] an nicht klebfreien Stellen | 24 | 24 | 24 |
| Klebkraft [g/m²] an nicht klebfreien Stellen | 2,8 | 2,8 | 2,8 |
| Verschlußsicherheit | | | |
| nach 30 Tagen RT | i.O. | i.O. | i.O. |
| nach 30 Tagen 40°C | i.O. | i.O. | i.O. |
| Scherfestigkeit an nicht klebfreien Stellen | 600 min | 600 min | 600 min |
| Anfaßvermögen zu Papier an nicht klebfreien Stellen | gut | gut | gut |
| Öffnungsfähigkeit | | | |
| nach 30 Tagen RT | nur schwer möglich | leicht an klebfreier Stelle | leicht an klebfreier Stelle |
| nach 30 Tagen 40°C | nur schwer möglich | leicht an klebfreier Stelle | leicht an klebfreier Stelle |

## Patentansprüche

1. Klebeband mit einem Träger auf Basis einer gereckten Thermoplastfolie, der einseitig mit einer Klebemasse beschichtet ist, wobei auf der beschichteten Seite des Trägers zumindest ein im Vergleich zur Breite des Klebebands schmaler und in Längsrichtung des Klebebands verlaufender Streifen vorhanden ist, dessen Klebkraft zumindest abschnittsweise durch eine Bedruckung der Klebemasse verringert oder vollständig reduziert ist und wobei ein Streifen am Rand des Klebebands liegt

2. Klebeband nach Anspruch 1, **dadurch** gekenntzeichnet, dass die Thermoplastfolie aus biaxial gerecktem HDPE, Hart-PVC oder PET, aus monoaxial gerecktem Polypropylen oder biaxial gerecktem Polypropylen besteht.

3. Klebeband nach zumindest einem der vorangegangenen Anspruche, **dadurch gekennzeichnet, dass** die verwendete Thermoplastfolie eine Foliendicke von 25 µm bis 200 µm aufweist.

4. Klebeband nach zumindest einem der vorherigen Ansprüche, **dadurch gekennzeichnet, dass** zwischen der Thermoplastfolie und der Kleberschicht eine Schicht aus einem Primer aufgetragen ist.

5. Klebeband nach zumindest einem der vorherigen Ansprüche, **dadurch gekennzeichnet, dass** eine Klebemasse auf Basis von Naturkautschuk, Acrylaten oder Styrol-Isopren-Styrol Blockcopolymeren verwendet wird.

6. Verwendung des Klebebandes nach zumindest einem der vorherigen Ansprüche als Verpackungsklebeband mit gutem Kartonverschluss und mit gutem Anfassvermögen zu Papier, insbesondere recyceltem Papier, ausreichender Kohäsion, guter Verpackungssicherheit und leichtem Abrollen.

7. Verwendung des Klebebandes nach zumindest einem der vorherigen Ansprüche als Verpackungsklebeband mit gutem Kartonverschluss und mit gutem Anfassvermögen zu Papier, insbesondere recyceltem Papier, ausreichender Kohäsion, guter Verpackungssicherheit und leichtem Abrollen, bei gleichzeitigem einfachem Entfernen des Verpackungsklebebandes ohne Zuhilfenahme von Öffnungshilfsmitteln.

8. Verwendung des Klebebandes nach zumindest einem der vorherigen Ansprüche als Strapping Tape zum Bündeln und Palettieren von Kartonagen und anderen Gütern.

## Claims

1. Adhesive tape having a backing which is based on an oriented thermoplastic film and is coated on one side with an adhesive, the coated side of the backing bearing at least one strip which is narrow in comparison to the width of the tape and which extends in the longitudinal direction of the tape, the adhesive force of said strip being reduced completely or lessened at least in sections by imprinting the adhesive and a strip being at the edge of the adhesive tape.

2. Adhesive tape according to Claim 1, **characterized in that** the thermoplastic film is composed of biaxially oriented HDPE, unplasticized PVC or PET, of monoaxially oriented polypropylene or biaxially oriented polypropylene.

3. Adhesive tape according to at least one of the preceding claims, **characterized in that** the thermoplastic film used has a thickness of from 25 µm to 200 µm.

4. Adhesive tape according to at least one of the preceding claims, **characterized in that** a layer of a primer is applied between the thermoplastic film and the adhesive layer.

5. Adhesive tape according to at least one of the preceding claims, **characterized in that** an adhesive based on natural rubber, acrylates or styrene-isoprene-styrene block copolymers is used.

6. Use of the adhesive tape according to at least one of the preceding claims as an adhesive packaging tape with good carton sealing and with good tack with respect to paper, especially recycled paper, sufficient cohesion, good packaging security, and easy unwind.

7. Use of the adhesive tape according to at least one of the preceding claims as an adhesive packaging tape with good carton sealing and with good tack with respect to paper, especially recycled paper, sufficient cohesion, good packaging security, and easy unwind, with simultaneous ease of removal of the adhesive packaging tape without the assistance of opening aids.

8. Use of the adhesive tape according to at least one of the preceding claims as strapping tape for bundling and palletizing cardboard packaging and other goods.

## Revendications

1. Bande adhésive avec un support à base d'une feuille thermoplastique étirée, qui est revêtue d'un côté avec une masse adhésive, au moins une bandelette plus étroite par rapport à la largeur de la bande adhésive et s'étendant dans le sens longitudinal de la bande adhésive se trouvant sur le côté revêtu du support, dont l'adhésivité est, du moins en partie, diminuée ou complètement réduite par une impression de la masse adhésive et une bandelette étant située au bord de la bande adhésive.

2. Bande adhésive selon la revendication 1, **caractérisée en ce que** la feuille thermoplastique est constituée par du HDPE étiré biaxialement, du PVC dur ou du PET, du polypropylène étiré monoaxialement ou du polypropylène étiré biaxialement.

3. Bande adhésive selon au moins l'une quelconque des revendications précédentes, **caractérisée en ce que** la feuille thermoplastique utilisée présente une épaisseur de feuille de 25 µm à 200 µm.

4. Bande adhésive selon au moins l'une quelconque des revendications précédentes, **caractérisée en ce qu'**une couche d'un apprêt est appliquée entre la feuille thermoplastique et la couche adhésive.

5. Bande adhésive selon au moins l'une quelconque des revendications précédentes, **caractérisée en ce qu'**on utilise une masse adhésive à base de caoutchouc naturel, d'acrylates ou de copolymères à blocs de styrène-isoprène-styrène.

6. Utilisation de la bande adhésive selon au moins l'une quelconque des revendications précédentes comme bande adhésive pour emballage avec une bonne fermeture des boîtes en carton et un bon pouvoir de prise sur le papier, en particulier le papier recyclé, une cohésion suffisante, une bonne fiabilité d'emballage et un déroulement aisé.

7. Utilisation de la bande adhésive selon au moins l'une quelconque des revendications précédentes comme bande adhésive d'emballage avec une bonne fermeture des boîtes en carton et un bon pouvoir de prise sur le papier, en particulier le papier recyclé, une cohésion suffisante, une bonne fiabilité d'emballage et un déroulement aisé, avec simultanément une élimination aisée de la bande adhésive d'emballage sans se servir de moyens auxiliaires d'ouverture.

8. Utilisation de la bande adhésive selon au moins l'une quelconque des revendications précédentes comme bande de cerclage pour la formation de paquets et la palettisation de boîtes en carton et d'autres marchandises.
